# EUROPÄISCHE PATENTSCHRIFT

(11) **EP 4 323 588 B1**
(45) Veröffentlichungstag und Bekanntmachung des Hinweises auf die Patenterteilung: **05.03.2025**
(21) Anmeldenummer: 22717551.0
(22) Anmeldetag: 22.03.2022
(51) Int. Cl.: E02B 17/00, E04H 12/34, F03D 13/25, G01N 19/00

(54) **VERFAHREN ZUR HERSTELLUNG EINER VERBINDUNG ZWISCHEN ZWEI ROHRSEGMENTEN EINES TURMARTIGEN BAUWERKS**
METHOD FOR PRODUCING A CONNECTION BETWEEN TWO PIPE SEGMENTS OF A TOWER-LIKE STRUCTURE
PROCÉDÉ DE RÉALISATION D'UNE LIAISON ENTRE DEUX SEGMENTS DE TUYAU D'UNE STRUCTURE DE TYPE TOUR

(30) Priorität: 12.04.2021 DE 102021109035
(43) Veröffentlichungstag der Anmeldung: 21.02.2024
(73) Patentinhaber: RWE Offshore Wind GmbH, 45141 Essen (DE)
(72) Erfinder: BARTMINN, Daniel, 45141 Essen (DE)
(74) Vertreter: Cohausz & Florack
(86) Internationale Anmeldenummer: PCT/EP2022/057415
(87) Internationale Veröffentlichungsnummer: WO 2022/218655

(56) Entgegenhaltungen:
- EP-A2- 3 255 210

## Beschreibung

Der Gegenstand betrifft ein Verfahren zur Herstellung einer Verbindung zwischen zwei Rohrsegmenten eines turmartigen Bauwerks. Insbesondere betrifft das Verfahren die Verbindung zwischen zwei Rohrsegmenten eines Offshore-Bauwerks, einer Windkraftanlage oder einer Offshore-Windkraftanlage.

Dokument EP 3 255 210 A2 gehört zum Stand der Technik und wird für das Verständnis der Erfindung als nützlich angesehen.

Turmartige Bauwerke, insbesondere Offshore-Bauwerke, dabei bevorzugt Offshore-Windkraftanlagen werden in der Regel im Boden, insbesondere im Meerboden gegründet. Diese Gründung erfolgt über sogenannte Monopfähle (Monopiles),Tripiles, oder mit Pfählen (piles) verankerten , Jackets, oderTripodsDies sind Rohre, insbesondere Stahlrohre, die mittels geeigneter Rammen in den Meerboden gerammt werden. Oberseitig der in den Boden gerammten Rohrsegmente wird eine Anbindung dieser sogenannten Gründungspfähle an die restliche Bauwerksstruktur über ein Übergangsstück (Transition Piece) hergestellt. Das Transition Piece wird hierzu mit dem Gründungspfahl mechanisch verbunden. Das Transition Piece (in diesem Zusammenhang) beschreibt jegliche rohrartigen Elemente zwischen Pfahl und Turm, mit oder ohne Einbauten. Eine solche Verbindung kann eine Flanschverbindung, eine sogenannte Groutverbindung mit einer Vergussmasse als auch eine gleitende Verbindung zweier ineinander geschobener Rohrsegmente, ein sogenanntes Slip Joint sein.

Bei der Groutverbindung wird ein Ringraum zwischen den ineinander geschobenen Rohrsegmenten bei der Installation mit Vergussmasse, insbesondere Zementvergussmasse aufgefüllt. Die Vergussmasse härtet aus und es bildet sich ein Kraft- und Formschluss zwischen den Rohrsegmenten. Eine Groutverbindung hat in der Regel eine erwartete mindest Lebensdauer zwischen 15 und 25 Jahren.

Neben der Groutverbindung ist eine weitere bekannte Verbindung ein Slip Joint. Hierbei werden die Rohrsegmente ineinander geschoben und liegen im eingeschobenen Zustand, anders als bei der Groutverbindung, unmittelbar aneinander an. Hierzu kann das obere Turmsegment auf das untere Turmsegment aufgestülpt werden oder das obere Turmsegment kann in das untere Turmsegment eingesteckt werden. Bei herkömmlichen Slip Joint Verbindungen verjüngt sich das obere Rohrsegment an seiner Außenwand hin zu einer unteren Stirnseite mit der dieses in das untere Turmsegment eingesteckt wird. Das untere Turmsegment weitet sich an seiner Innenwand hin zu einer oberen Stirnseite, in die das obere Rohrsegment eingeschoben wird, auf. Diese Verjüngungen können zueinander korrespondieren sowie komplementär sein und insbesondere konisch sein. Wird das obere Segment auf das unterne Segment aufgestülpt und nicht eingeschoben, verlaufen die Verjüngungen umgekehrt.

Eine relativ neue Verbindungstechnologie ist ein sogenanntes Double Slip Joint. Hierbei werden die beiden ineinander zu steckenden Rohrsegmente nicht an ihrer gesamten ineinandergesteckter Mantelfläche miteinander unmittelbar in Berührung gebracht. Vielmehr sind in Längsrichtung der Rohrsegmente beabstandet voneinander Fügeelemente vorgesehen, die in einer Ebene senkrecht zur Längsachse der Rohrelemente verlaufen und zumindest teilweise, bevorzugt vollständig umlaufend an einer Innenwand und/oder einer Außenwand eines Rohrsegments angeordnet sind. Die Fügeelemente haben zueinander korrespondierende sowie komplementäre Flächen, die im gefügten Zustand aneinander liegen. Die Fügeflächen zweier Rohrsegmente weisen einander zu. Die Fügeelemente können sich konisch hin zu der jeweiligen Stirnkante, an der die Rohrsegmente miteinander verbunden werden, verjüngen. Die Double Slip Joint Verbindungen sind erheblich kostengünstiger als vollflächige Slip Joints, da nur die Fügeelemente und ihre Fügeflächen über ein ausreichend hohe Maßhaltigkeit verfügen müssen, die Rohrsegmente als solche jedoch im Bereich ihrer Stirnkante nur geringere Anforderungen an Maßhaltigkeit haben müssen.

Da die Verbindungen, insbesondere in Offshore-Bauwerken, über zumindest ein Jahrzehnt, bevorzugt mehr als ein Jahrzehnt, insbesondere zwei Jahrzehnte oder länger verlässlich stabil sein müssen, besteht die Gefahr, dass neue Technologien, nachdem sie im Feld ausgerollt wurden, der Dauerbelastung nicht standhalten. Dies ist dann problematisch, wenn hohe Stückzahlen bereits ausgerollt wurden und diese umgerüstet werden müssen. Bei Offshore-Bauwerken ist dies nahezu unmöglich bzw. mit derart hohen Kosten verbunden, die denen einer Neuinstallation gleich kommen. Dies muss sicher verhindert werden. Daher bestehen derzeit bedenken, Double Slip Joints ohne jahrelange Tests in großer Stückzahl zu installieren.

Dem Gegenstand lag daher die Aufgabe zugrunde, ein Verfahren zur Verfügung zu stellen, welches den Einsatz von Double Slip Joints mit einem minimierten Ausfallrisiko ermöglicht.

Diese Aufgabe wird durch ein Verfahren nach Anspruch 1 gelöst.

Bei dem gegenständlichen Verfahren werden zwei Rohrsegmente eines turmartigen Bauwerks ineinander gesteckt. Die Rohrsegmente können aus Stahl und/oder Stahlbeton gebildet sein. Hierbei ist jedwede Materialkombination denkbar.

Das untere Rohrsegment hat eine obere Stirnseite und das obere Rohrsegment hat eine untere Stirnseite. Oben und unten beziehen sich auf den Einbauzustand der Rohrsegmente. Bevorzugt ist das untere Rohrsegment im Einbauzustand in den Boden, bevorzugt den Meeresboden gegründet. Die Rohrsegmente werden an ihren einander zugewandten Stirnkanten, den untern und der oberen, ineinander geschoben.

An den einander zugewandten Mantelflächen der Rohrsegmente im eingeschobenen Zustand können Fügeelemente angeordnet sein. Hierbei ist es möglich, dass an beiden Rohrsegmenten zueinander korrespondierende Fügeelemente vorgesehen sind oder an einem Rohrsegment ein Fügeelement und an dem anderen Rohrsegment die Mantelfläche korrespondierend, komplementär zu dem Fügeelement gebildet ist. Eine solche korrespondierende Mantelfläche kann auch als Fügeelement im weitesten Sinne verstanden werden.

Die Fügeelemente verfügen über Fügeflächen, an denen ein unmittelbarer Kontakt zwischen den Rohrsegmenten, respektive ihrer jeweiligen Fügeelemente, im Einbauzustand gebildet ist. Die Fügeelemente sind insbesondere zumindest teilweise umlaufende Vorsprünge an der inneren Mantelfläche oder der äußeren Mantelfläche eines jeweiligen Rohrsegments.

Für den Fall, dass das obere Rohrsegment in das untere Rohrsegment eingesteckt wird, ist an dem unteren Rohrsegment an seiner inneren Mantelfläche ein Fügeelement angeordnet und an dem oberen Rohrsegment an seiner äußeren Mantelfläche. Für den Fall, dass das obere Rohrsegment über das untere Rohrsegment gestülpt wird, ist an dem unteren Rohrsegment an seiner äußeren Mantelfläche ein Fügeelement angeordnet und an dem oberen Rohrsegment an seiner inneren Mantelfläche.

Die zueinander korrespondierenden Fügeelemente sind jeweils mit einem Abstand in Längsrichtung des Rohrsegmentes von einer stirnseitigen Kante an der Mantelfläche des Rohrsegments angeordnet.

Für ein Double Slip Joint sind jeweils zumindest zwei Fügeelemente an den Mantelflächen der Rohrsegmenten angeordnet. Die zumindest zwei Fügeelemente sind in Richtung der Längsachse der jeweiligen Rohrsegmente beabstandet voneinander angeordnet.

Die lichte Weite, also der minimale freie Innendurchmesser an einem Fügeelement, welches näher an der Stirnkante eines aufnehmenden Rohrsegments ist, ist in der Regel größer als die lichte Weite des weiter von der Stirnkante des aufnehmenden Rohrsegments entfernten Fügeelements. Dies stellt sicher, dass das einzusteckende Rohrsegment mit seinem Fügeelement, welches näher an dessen Stirnkante liegt, in das aufnehmende Rohrsegment und dem dort näher an der Stirnkante liegenden Fügeelement vorbei, bis auf das weiter von der Stirnkante weg liegende Fügeelemente aufgesteckt werden kann.

Über die Fügeelemente, respektive die einander zugewiesenen Fügeflächen der Fügeelemente, werden die ineinander gesteckten Rohrsegmente mechanisch miteinander gekoppelt. Durch insbesondere konische Fügeflächen werden die Rohrsegmente zueinander ausgerichtet.

Dieses oben beschriebene Fügen zweier Rohrsegmente eines turmartigen Bauwerks ergibt ein sogenanntes Double Slip Joint, bei dem zumindest zwei bevorzugt ringförmige Fügeelemente an den einander zugewiesenen Mantelflächen der jeweiligen Rohrsegmenten, in Längsrichtung beabstandet voneinander, miteinander unmittelbar in Kontakt sind. Die einander zugewiesenen Fügeflächen der jeweiligen Fügeelemente liegen im Einbauzustand aneinander an. Die Fügeflächen richten die Rohrsegmente zueinander aus und koppeln diese mechanisch miteinander. Eine solche Verbindung ist bereits bekannt.

Die Fügeelemente erstrecken sich in einer radialen Richtung des Rohrsegments. Ein Fügeelement an einer äußeren Mantelfläche erstreckt sich radial nach außen, ein Fügeelement an einer inneren Mantelfläche erstreckt sich radial nach innen. Wenn die Fügeflächen der Fügeelemente zweier Rohrsegmente aneinander anliegen, bildet sich abseits der Fügeelemente, insbesondere in Längsrichtung zwischen den Fügeelementen ein Ringspalt zwischen den Rohrsegmeriten. Dieser Ringspalt wird gegenständlich genutzt, um ihn nachträglich zu verfüllen, wie nachfolgend beschrieben werden wird.

Um nun diesen Double Slip Joint für turmartige Bauwerke massenhaft zum Einsatz zu bringen, ist es zwingend erforderlich, dass dieser über die erforderliche Lebenszeit dauerstabil sind. Dies konnte bisher noch nicht ausreichend getestet werden, so dass Bedenken bestehen, dass Double Slip Joints den mechanischen Belastungen im Feld standhalten können. Dies gilt insbesondere für Offshore-Bauwerke, insbesondere Windkraftanlagen.

Windkraftanlagen können dabei Windturbinen, Substations, Trafostationen oder dergleichen sein. Turmartige Bauwerke können auch Bohrplattformen (Öl, Gas), Aufnahmen für Fotovoltaikanlagen oder dergleichen sein.

Gegenständlich wird vorgeschlagen, dass zumindest ein mechanischer Parameter der mechanischen Kopplung zwischen den Rohrsegmenten über zumindest einen Messwertaufnehmer an zumindest einem Rohrsegment erfasst wird. Es kann ein Parameter durch einen Messwertaufnehmer oder mehrere Parameter durch einen oder mehrere Messwertaufnehmer erfasst werden. Ein Messwertaufnehmer kann ein Messwertsensor sein. Ein Messwertaufnehmher kann insbesondere ein Dehnmessstreifen oder ein Beschleunigungssensor sein. Weitere relevante können Messaufnehmer sind Druckmessdosen zur Erfassung radialer Drücke und Spannungen, induktive, elektro-magnetische Messaufnehmer oder akustische Messaufnehmer, welche Auscluss über mögliche Rissigkeit im Material der Fügeflächen geben, sein.

Diese Messweraufnehmer sind bevorzugt unmittelbar an den Rohrsegmenten und/oder unmittelbar an den Fügeelementen angeordnet. Mit Hilfe der Messwertaufnehmer lassen sich mechanische Parameter, wie sie nachfolgend noch beschrieben werden, erfassen.

Ein turmartiges Bauwerk ist für bestimmte mechanische Belastungen ausgelegt und dimensioniert. Insbesondere sind Grenzwerte für bestimmte mechanische Parameter definiert, unterhalb derer das Bauwerk als stabil gilt. Werden derartige Grenzwerte unter- oder überschritten, kann eine mechanische Stabilität des Bauwerks gegebenenfalls gefährdet sein. Dabei kommt es insbesondere auf ein Spannungs-Dehnungs-Verhalten der Bauteile, ein Schwingungsverhalten der Bauteile, ein Bewegungsverhalten der Bauteile relativ zueinander oder dergleichen an. Wenn ein mechanischer Parameter seinen Sollwertbereich verlässt, besteht eine Gefährdung des gesamten Bauwerks. Da, wie bereits gesagt, Double Slip Joints, insbesondere in Offshore-Anwendungen, bisher noch nicht massenhaft zum Einsatz gekommen sind, ist unbekannt, ob sie den erheblichen mechanischen Belastungen standhalten können. Mithilfe des gegenständlichen Messwertaufnehmers ist es möglich, zu überprüfen, ob die mechanischen Parameter der Rohrsegmente und/oder Fügeelemente innerhalb der Sollwerte liegen. Die mechanischen Parameter werden dabei gegenständlich nach Erstinstallation und Inbetriebnahme des Bauwerks überwacht.

Zusätzlich oder alternativ wird durch die Messaufnehmer detektiert, ob Materialfehler, Rissigkeit, Korrosion oder sonstige Veränderungen erkennbar sind, welche die Tragfähigkeit und mechanischen Eigenschaften des Grundwerkstoffes beeinflussen oder gefährden und/oder mitunter zu plötzlichen Veränderungen führen oder die Wahrscheinlichkeit eines spröden Versagens erhöhen. Letzendlich gefährdern die Veränderungen dann auch die mechanische Stabilität des Bauwerks.

Wenn nach der Erstinstallation und Inbetriebnahme des Bauwerks anhand der erfassten mechanischen Parameter festgestellt wird, dass die mechanische Stabilität des Bauwerks gegebenenfalls gefährdet ist, kann ein Warnsignal ausgegeben werden. In der Folge dieses Warnsignals kann ein Prozess in Gang gesetzt werden, an dessen Ende der Ringspalt zwischen den Rohrsegmenten mit Vergussmasse verfüllt wird. Hierbei kann basierend auf dem Warnsignal ein Bautrupp disponiert werden, der dann zu gegebener Zeit an dem Bauwerk das Vergießen des Ringspalts mit Vergussmasse vornimmt. Somit wird sichergestellt, dass die Verbindung zwischen den Rohrsegmenten, welche zunächst als Double Slip Joint (DSJ) ausgeführt war, über die Restlaufzeit des Bauwerks aufgrund der Vergussmasse als Groutverbindung dauerstabil bleibt. Die Stabilität kann dabei auch durch die kombinierte Tragfähigkeit aus Resttragfähigkeit des DSJ und Groutverbindung erreicht, erhöht bzw verlängert werden.

Wenn in der nachfolgenden Beschreibung davon die Rede ist, dass ein mechanischer Parameter an einem Rohrsegment erfasst wird, so ist damit stets auch gemeint, dass dieser Parameter an einem Fügeelement erfasst werden kann. Ein mechanischer Parameter kann an einem Rohrsegment, an einem Fügeelement oder an beiden erfasst werden. Gemeint sind auch mechanische Parameter, die durch Messung akustischer oder elektromagnetischer Signale abgeleitet werden können.

Ein Fügeelement kann integraler Bestandteil eines Rohrsegments sein oder als eigenes Bauteil an dem Rohrsegment insbesondere dessen Innenwand (innere Mantelfläche) oder Außenwand (äußere Mantelfläche) angeordnet sein. Insbesondere kann das Fügeelement mit dem Material des Rohrsegments verschweißt sein.

Ein möglicher Parameter ist die Dehnung des Rohrsegments. Mithilfe eines Dehnmessstreifens kann die elastische und/oder plastische Dehnung des Rohrsegments erfasst werden.

Ein weiterer mechanischer Parameter kann die Stauchung des Rohrsegments sein. Mit Hilfe eines Dehnmessstreifens lässt sich die elastische und/oder plastische Stauchung des Rohrsegments messen.

Ein weiterer mechanischer Parameter kann eine Schwingung des Rohrsegments sein. Diese Schwingung kann sowohl mit einem Dehnmessstreifen als auch mit einem Beschleunigungssensor gemessen werden.

Auch die Beschleunigung des Rohrsegments kann ein mechanischer Parameter sein. Die Beschleunigung lässt sich insbesondere mit einem Beschleunigungssensor erfassen.

Auch können relative Bewegungen der Rohrsegmente zueinander als mechanische Parameter erfasst werden. Hierbei können Werte von zwei Messwertaufnehmern, die jeweils an einem der Rohrsegmente angeordnet sind, miteinander in Bezug gestellt werden und so kann eine Relativbewegung der Segmente zueinander erfasst werden.

Auch kann eine Eigenfrequenz ein mechanischer Parameter sein. Ein mechanisches Bauwerk kann auf eine dynamische mechanische Belastung ein bestimmtes Antwortverhalten haben. Dies kann beispielsweise als Sprungantwort oder Stoßantwort verstanden werden. Im Frequenzspektrum lässt sich ein solches Antwortverhalten auswerten. Dabei kann insbesondere eine Veränderung der Eigenfrequenz erfasst werden. Eine Veränderung der Eigenfrequenz lässt auf eine mechanische Veränderung des Bauwerks schließen. Gemeint sind auch hochfrequente Eigenschwingungen, welche Aufschluss über Rissigkeit geben können.

Insbesondere darf die 1. - 5. Eigenfrequenz nicht mehr als 5%, bevorzugt weniger als 2% vom Sollwert abweichen.

Ein weiterer mechanischer Parameter kann ein Spannungs-/Dehnungswert des Rohrsegments sein. Dieser kann z.B. nach VDI 4551 gemessen werden. Ein weitere Parameter kanndie Rissigkeit in Form von Länge und/oder Anzahl der Fehlstellen po sein.

Für jeden einzelnen der Parameter kann ein Sollwert oder ein Sollwert-Bereich vorgegeben sein. Ein solcher Sollwert lässt sich im Voraus anhand von Simulationen berechnen. So ist es möglich, mit Simulationen zu berechnen, welche mechanischen Parameter welche Werte bei welchen Belastungen annehmen. Auch ist es möglich, festzustellen, bei welcher Abweichung ein Parameter auf einen drohenden Defekt oder einen eingetretenen Defekt an dem Bauwerk hinweist. Diese Simulationen lassen sich computergestützt vor der Installation eines Bauwerks durchführen.

Sind Sollwerte oder Sollwert-Bereiche bestimmt, können diese dazu genutzt werden, um mit den tatsächlich erfassten mechanischen Parametern verglichen zu werden. Weicht der mechanische Parameter von dem Sollwert oder dem Sollwert-Bereich über einen Grenzwert ab, kann das Vergießen des Ringspalts beginnen.

Gemäß einem Ausführungsbeispiel wird vorgeschlagen, dass nicht nur ein mechanischer Parameter, sondern auch ein zeitlicher Gradient eines mechanischen Parameters bestimmt wird. Auch anhand eines Gradienten lässt sich eine Veränderung an der Bauwerksstruktur feststellen. Solche Gradienten lassen sich ebenso wie die Sollwerte im Voraus simulieren und ebenso kann bei einer Abweichung der Vergussprozess beginnen. Die messtechnische Erfassung kann durch visuelle Inspektionen unterstützt, ergänzt oder ersetzt werden, um zu einer Beurteilung der strukturellen Integrität und Stabilität zu gelangen.

Gemäß einem Ausführungsbeispiel wird vorgeschlagen, dass die Festigkeit der Vergussmasse abhängig von einer vorgegebenen Restbetriebsdauer des Bauwerks bestimmt wird und mit abnehmender Restbetriebsdauer geringer wird. Die mechanischen Eigenschaften der Vergussmasse können eingestellt werden. Insbesondere eine Festigkeit kann eine solche mechanische Eigenschaft sein. Für das Bauwerk ist eine Betriebsdauer vorgegeben. Gegenständlich wird während der Betriebsdauer, das heißt nach Erstinbetriebnahme, der mechanische Parameter erfasst. Es kann auch erfasst werden, wie lange die Restbetriebsdauer ist. Je kürzer die Restlebensdauer, desto weniger muss die Vergussmasse geeignet sein, das Bauwerk dauerhaft zu schützen. So kann die Festigkeit der Vergussmasse mit abnehmender Restbetriebsdauer ebenfalls abnehmen um bis zum Ende der Betriebsdauer des Bauwerks dieses vor mechanischer Beschädigung zu schützen.

Gemäß einem Ausführungsbeispiel wird vorgeschlagen, dass als Rohrsegmente Stahlrohrsegmente oder Stahlbetonsegmente verwendet werden. Eine Materialkombination dieser beiden ist möglich.

Auch wird vorgeschlagen, dass als Rohrsegmente wenigstens im Bereich des Ringspalts zylindrische oder konische Rohrsegmente verwendet werden. Auch die Fügeelemente können insbesondere konisch sein.

Als Rohrsegmente werden Rohrsegmente eines Offshore-Bauwerks bevorzugt verwendet. Diese verfügen in der Regel über Materialeigenschaften, die den Bedingungen im Offshore-Bereich gewachsen sind. So kann insbesondere eine Dauerfestigkeit gegenüber Salzwasser notwendig sein.

Gemäß einem Ausführungsbeispiel wird vorgeschlagen, dass die Rohrsegmente unter Ausbildung eines Ringspalts zwischen den Rohrsegmenten konzentrisch zueinander positioniert werden. Hierbei sind insbesondere die Fügeelemente so an den Mantelflächen der Rohrsegmente angeordnet, dass diese im verbundenen Zustand die Rohrsegmente konzentrisch zueinander positionieren können.

Gemäß einem Ausführungsbeispiel wird vorgeschlagen, dass das äußere Rohrsegment und/oder innere Rohrsegment im Bereich des Ringspalts wenigstens eine Schubrippe aufweist, wobei die wenigstens eine Schubrippe wenigstens im Wesentlichen umlaufend, bevorzugt vollständig umlaufend an dem Rohrsegment angeordnet ist, insbesondere dass die wenigstens eine Schubrippe wenigstens im Wesentlichen ringförmig an dem Rohrsegment angeordnet ist. Eine Schubrippe kann aber auch nur abschnittsweise in Winkelabschnitten unlaufend angeordnet sein. Eine Schubrippe kann wie ein Fügeelement an einer Mantelfläche des Rohrsegments im Bereich des Ringspalts angeordnet sein. Eine Schubrippe kann insbesondere in einer Ebene senkrecht zur Längsachse des Rohrsegments verlaufen. Schubrippen sind jedoch in ihrer radialen Ausdehnung kleiner als die Fügeelemente, sodass die Schubrippen bevorzugt nicht in Kontakt mit dem jeweils anderen Rohrsegment kommen. Die Schubrippen sind dazu gedacht, dass im Fall des Vergießens die Vergussmasse formschlüssig die Schubrippen umgreift und somit eine formschlüssige Verbindung zwischen der Vergussmasse und dem jeweiligen Rohrsegment gegeben ist.

Gemäß einem Ausführungsbeispiel wird vorgeschlagen, dass als Vergussmasse ein Vergussmörtel und/oder ein Grout verwendet wird. Dieses Grout ist insbesondere ein expandierendes Grout. Insbesondere kann ein Alkalisilikat als reaktiver Zuschlag verwendet werden. Auch sind Zuschläge von Betonit, Calcium (zusammen bevorzugt <15M%), Sulfoaluminiumzementen und/oder Aluminat möglich. Die Summe der Zuschläge ist bevorzugt <60M%.

Gemäß einem Ausführungsbeispiel wird vorgeschlagen, dass als Vergussmasse ein Vergussmörtel und/oder ein Grout mit einer Würfeldruckfestigkeit von mehr als 60 MPa, bevorzugt mehr als 90 MPa, insbesondere mehr als 120 MPa verwendet wird.

Die Verbindung zwischen den Rohrsegmenten ist insbesondere in einem Bereich unterhalb des Wasserspiegels. Die Druckfestigkeit wird insbesondere nach DIN EN 12390 oder ASTM C39 oder ASTM C873 ermittelt.

Gemäß einem Ausführungsbeispiels wird vorgeschlagen, dass der Abstand der beiden Fügeelemente einer Mantelfläche in Längsrichtung zueinander derart ausgeführt wird, dass er zumindest das 0,5-fache des Durchmessers des inneren Rohrsegments, insbesondere des äußeren Durchmessers des inneren Rohrsegments, bevorzugt zumindest das 1-fache dieses Durchmessers , insbesondere zumindest das 1,5-fache dieses Durchmessers beträgt. Jedoch ist der Abstand der Fügeelemente bevorzugt kleiner als das 3-fache dieses Durchmessers. AlsDurchmesser kann der Innendurchmesser oder der Außendurchmesser des inneren Rohrsegments gemeint sein. Bevorzugt ist der Abstand derjenige der wirksamen Flächen der Fügeelemente, also insbesondere der Fügeflächen der Fügeelemente zueinander.

Auch wird vorgeschlagen, dass das Verhältnis zwischen dem äußeren Durchmesser des Ringspalts zu seiner radialen Ausbreitung, das heißt dem Abstand zwischen den Rohrsegmenten in radialer Richtung zueinander, derart ausgeführt wird, dass dieser zumindest 20 beträgt und kleiner ist als 150 insbesondere kleiner als 100 idealerweise kleiner als 45.

Um ein nachträgliches Verfüllen mit der Vergussmasse zu erleichtern, wird vorgeschlagen, dass die Vergussmasse über zumindest eine Öffnung in dem inneren Rohrsegment in den Ringspalt eingebracht wird. Auch ist es möglich, dass an zumindest einem Fügeelement zumindest eine verschließbare Öffnung vorgesehen ist, die zum Vergießen geöffnet werden kann und so die Vergussmasse in den Ringspalt eingebracht werden kann.

Nachfolgend wird der Gegentand anhand einer Ausführungsbeispiele zeigenden Zeichnung näher erläutert. In der Zeichnung zeigen:
- Fig. 1: eine Offshore-Windkraftanlage gemäß einem Ausführungsbeispiel;
- Fig. 2: zwei ineinander geschobene Rohrsegmente gemäß einem Ausführungsbeispiel;
- Fig. 3: zwei ineinander geschobene Rohrsegmente gemäß einem Ausführungsbeispiel;
- Fig. 4: der Ablauf eines gegenständlichen Verfahrens.

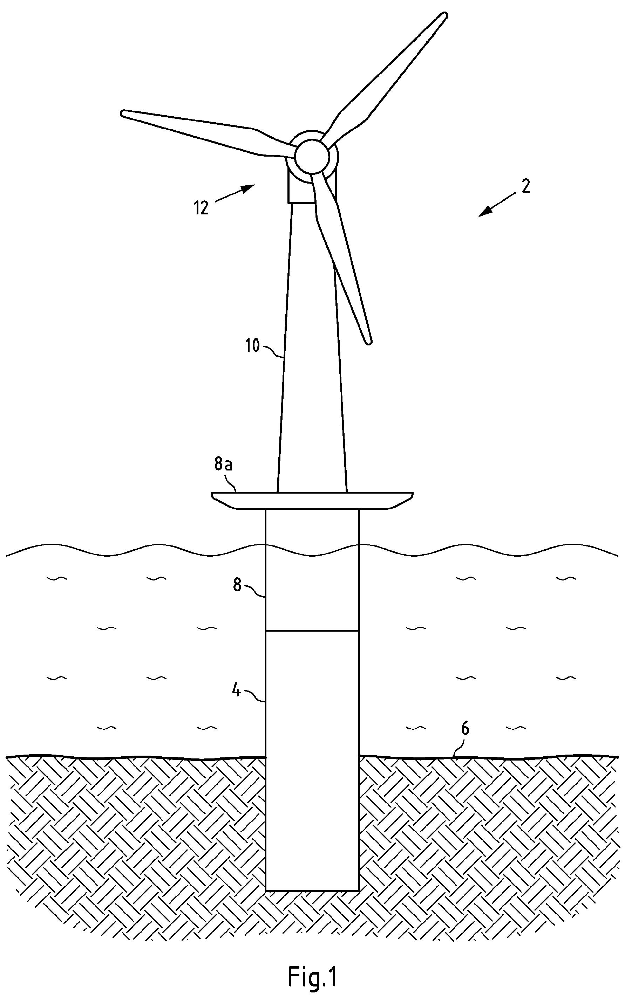

Fig. 1 zeigt eine Windkraftanlage 2, welche Offshore installiert ist. Die Gründungsstruktur der Windkraftanlage 2 weist ein Monopile 4 auf. Der Monopile 4 ist ein Rohrsegment, welches im Meerboden 6 gegründet ist. Die Art und Weise, wie ein Monopile 4 in einem Meerboden 6 gegründet wird, ist an sich bekannt.

An dem Monopile 4 ist unterhalb oder oberhalb des Wasserpegels ein Transition Piece 8 angeordnet, welches ebenfalls ein Rohrsegment ist. An dem Transition Piece 8 kann eine Bootlanding-Plattform 8a vorgesehen sein.

An dem Transition Piece 8 ist ein Turm 10 der Windkraftanlage, auf dem die Windturbine mit einer Gondel 12 angeordnet ist, befestigt. Der grundsätzliche Aufbau der Windkraftanlage 2 mit Turm 10 und Gondel 12 ist an sich bekannt.

Monopile 4 und Transition Piece 8 werden nachfolgend besispielhaft beschrieben. Das beschriebene gilt sinngemäß auch für andere Rohrsegmente eines Bauwerks, wie beispielsweise eine Bohrplattform oder dergleichen.

Gegenständlich wird die Verbindung zwischen dem als Rohrsegment gebildeten Monopile 4 und dem als Rohrsegment gebildeten Transition Piece 8 beispielhaft für alle denkbaren Rohrsegmente näher erläutert.

In der nachfolgenden Beschreibung ist stets das Transition Piece 8 als oberes Rohrsegment in den Monopile 4 als unteres Rohrsegment eingeschoben. Die Beschreibung gilt jedoch sinngemäß auch für den Fall, dass das Transition Piece 8 als oberes Rohrsegment über den Monopile 4 als unteres Rohrsegment gestülpt wird. Wesentlich an dem gegenständlichen Verfahren ist, dass die Verbindung zwischen den Rohrsegmenten, hier zwischen dem Monopile 4 und dem Transition Piece 8 als sogenannter Double Slip Joint ausgeführt ist und ein Ringraum zwischen den Rohrsegementen zwischen den Fügelementen bedarfsweise abhängig von Messwerten und mechanischen Parametern nach Inbetriebnahme verfüllt werden kann..

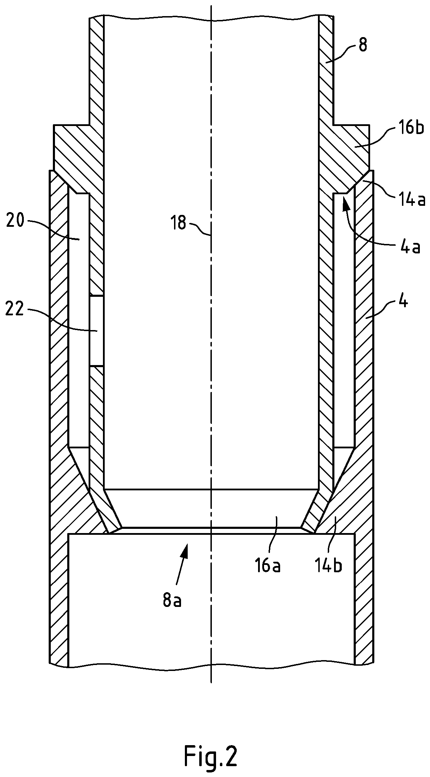

Fig. 2 zeigt einen Längsschnitt durch eine derartige Verbindung. Zu erkennen ist das Monopile 4. An dem Monopile 4 ist an seiner inneren Mantelfläche im Bereich einer stirnseitigen Öffnung 4a ein erstes Fügeelement 14a angeordnet. In dem gezeigten Beispiel ist das erste Fügeelement 14a durch eine entsprechende Profilierung des Öffnungsquerschnitts des Rohrelements geformt. Ein zweites Fügeelement 14b ist in einem Abstand in Längsrichtung 18 von der stirnseitigen Öffnung 4a an der Innenwand des Monopiles 4 angeordnet. Die beiden Fügeelemente 14a, b haben eine Verjüngung in Richtung der stirnseitigen Öffnung 4a und sind bevorzugt konisch geformt.

Das Transition Piece 8 hat an seiner äußeren Mantelfläche ebenalls Fügeelemente 16a und 16b. Das Fügeelement 16a ist an einer stirnseitigen Öffnung 8a des Transition Pieces 8. Auch hier kann das Fügeelement 16a durch eine entsprechende Profilierung der Wandung des Transition Pieces 8 im Bereich der stirnseitigen Öffnung 8a geformt sein. In einem Abstand in Längsrichtung 18 von der stirnseitigen Öffnung 8a ist ein weiteres Fügeelement 16b an der äußeren Mantelfläche des Transition Pieces 8 angeformt. Auch die Fügeelemente 16a, b haben eine Verjüngung in Richtung der stirnseitigen Öffnung 8a und sind bevorzugt konisch.

Die bevorzugt konischen Verjüngungen der Fügeelemente 14a, 16b respektive 14b, 16a haben zueinander korrespondierende, komplementäre Profilierungen. Dies führt dazu, dass im eingesetzten Zustand die Fügeelemente 14a, 16b sowie 14b, 16a an ihren einander zugewandten Flächen, den sogenannten Fügeflächen, unmittelbar aneinander anliegen. Die Fügeelemente 14, 16 sind so geformt, dass sich im Einbauzustand zwischen den Rohrsegmenten, insbesondere dem Transition Piece 8 und dem Monopile 4 ein Ringraum 20 bildet. In dem Transition Piece 8 ist an der Wandung eine Öffnung 22 vorgesehen, welche von innen geöffnet und/oder verschlossen werden kann, um den Ringraum 20, wie nachfolgend noch beschrieben werden wird, mit Vergussmasse befüllen zu können.

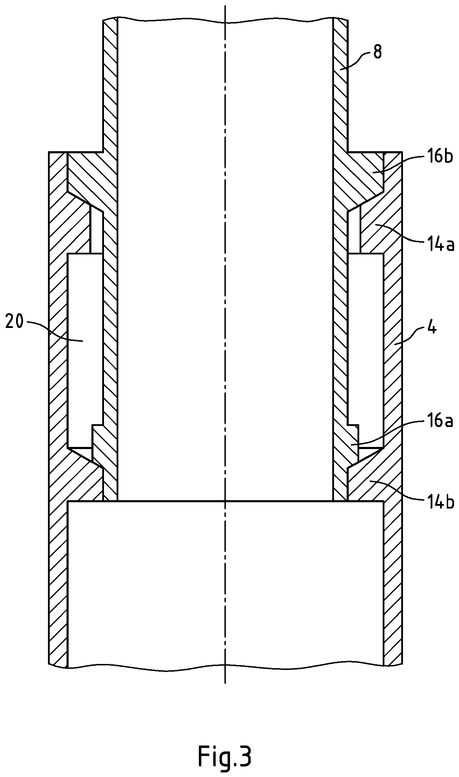

Fig. 3 zeigt ein weiteres Ausführungsbeispiel eines Monopiles 4 mit einem darin eingesteckten Transition Piece 8. Im Unterschied zu der Fig. 2 sind die Fügeelemente 14a, 16b nicht unmittelbar an der Stirnkante von Transition Piece 8 oder Monopile 4, sondern in Längsrichtung 18 versetzt zur Stirnkante angeordnet. Auch hier sind wiederum die Fügeelemente 14a, 16b sowie 14b, 16a zueinander komplementär, so dass im gefügten Zustand entsprechende Fügeflächen aneinander anliegen. Auch hier bildet sich ein Ringraum 20.

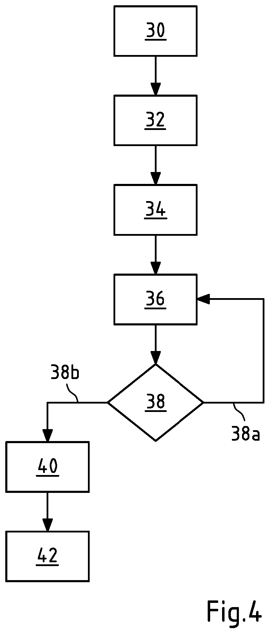

Fig. 4 zeigt einen Ablauf eines gegenständlichen Verfahrens. In einem Schritt 30 wird zunächst eine Simulation einer Verbindung zweier Rohrsegmente 4, 8, insbesondere gemäß den Figuren 2 und 3 durchgeführt, um deren Belastungsfähigkeit und mechanische Reaktion auf mechanische Belastung zu überprüfen. Hierbei werden die unterschiedlichsten, oben bereits erwähnten, mechanischen Parameter simuliert und es wird simuliert, innerhalb welcher Grenzen die Parameter sich bewegen dürfen, ohne dass das Bauwerk Schaden nimmt. Für die verschiedensten Parameter werden Sollwerte oder Sollwertbereiche simuliert, die angeben, wie sich der mechanische Parameter verändern kann oder in welchem Bereich der mechanische Parameter liegen kann, ohne dass das Bauwerk Schaden nimmt.

Mit den so gewonnen Werten wird eine Verbindung zwischen Monopile 4 und Transition Piece 8 in einem Schritt 32 tatsächlich gebaut. Hierbei wird das Bauwerk tatsächlich in-situ errichtet und in Betrieb genommen. Während des Baus wird in einem Schritt 34 zumindest ein Messwertaufnehmer, bevorzugt werden eine Vielzahl von Messwertaufnehmern, an den Rohrsegmenten 4, 8 und/oder den Fügeelementen 14, 16 angeordnet.

Nach der Inbetriebnahme wird fortwährend in einem Schritt 36 eine Überwachung der von den Messwertaufnehmern erfassten Messwerte durchgeführt. Dabei kann jeweils eine Messung nach einem definierten Zeitintervall (1 Minute, 5 Minuten, 15 Minuten oder dergleichen) erfolgen oder es kann eine dauerhafte Messung erfolgen. Die erfassten Messwerte korrespondieren zu den zuvor simulierten mechanischen Parameter.

In einem Schritt 38 wird der erfasste mechanische Parameter mit dem simulierten Sollwert bzw. Sollwertbereich verglichen. Liegt der tatsächliche Wert innerhalb des Sollwertes oder des Sollwertbereiches, insbesondere unterhalb oder oberhalb eines Grenzwertes, so wird in 38a zurück in Schritt 36 verzweigt. Kommt es jedoch dazu, dass einer oder mehrere der Parameter außerhalb des Sollwertbereichs oder um einen Grenzwert außerhalb eines Sollwerts liegt, wird in einem Schritt 38b in Schritt 40 verzweigt.

In Schritt 40 wird ein Warnsignal ausgegeben, welches in Schritt 42 dazu führt, dass der Ringraum 20 mit einer Vergussmasse, insbesondere vergroutet wird.

Hierzu wird ein Montagetrupp beauftragt, an dem bereits errichteten Bauwerk eine Vergroutung vorzunehmen. Dazu fährt der Montagetrupp bevorzugt mit einem entsprechenden Montageschiff zu dem Bauwerk. Über eine nicht gezeigte Öffnung wird eine Zuleitung bis an die Öffnung 22 innerhalb des Transition Pieces 8 herangeführt. Die Öffnung 22 wird geöffnet und durch die Öffnung 22 wird Vergussmasse in den Ringraum 20 eingefüllt. Nachdem der Ringraum 20 bevorzugt vollständig gefüllt wurde, wird die Öffnung 22 wieder verschlossen und die Vergussmasse kann aushärten. Nach dem Aushärten der Vergussmasse ist eine Groutverbindung gebildet. Diese Groutverbindung ist mechanisch so ausgelegt, dass die Vergussmasse eine ausreichende Festigkeit hat, das Bauwerk vor Beschädigung zu schützen. Diese Festigkeit ist so gewählt, dass das Bauwerk bis zum Ende seiner prognostizierten Betriebsdauer mechanisch stabil ist.

Mit Hilfe des gezeigten Verfahrens ist es somit möglich, Double Slip Joints bereits im Feld einzusetzen, ohne tatsächlich Kenntnis von ihrer Dauerstabilität zu haben. Sollten solche Bauwerke im Laufe der Betriebsdauer Gefahr laufen, Schaden zu nehmen oder bereits Schaden genommen haben, insbesondere am Double Slip Joint, ermöglicht das gegenständliche Verfahren das nachträgliche Vergrouten, sodass aus dem Double Slip Joint eine Groutverbindung wird, welche bis zum Rest der Betriebsdauer ausreichende mechanische Stabilität gewährleistet.

## Patentansprüche

1. Verfahren zur Herstellung einer Verbindung zwischen zwei Rohrsegmenten eines turmartigen Bauwerks, insbesondere einer Windkraftanlage (2), bei dem ein erstes Rohrsegment stirnseitig in ein zweites Rohrsegment geschoben wird oder ein erstes Rohsegment stirnseitig über ein zweites Rohrsegment gestülpt wird und zwischen dem ersten und dem zweiten Rohrsegment ein Ringraum (20) gebildet wird, im Ringraum (20) zwei in Längsrichtung (18) der Rohrsegmente voneinander beabstandete, zumindest teilweise umlaufende Fügeelemente angeordnet sind, wobei die Fügeelemente an einer Außenwand eines der Rohrsegmente und/oder an einer Innenwand eines der Rohrsegmente angeordnet werden und die Rohrsegmente über die Fügeelemente im Ringraum (20) miteinander mechanische gekoppelt werden, **dadurch gekennzeichnet, dass** ein mechanischer Parameter der mechanischen Kopplung zwischen den Rohrsegmenten über zumindest einen Messwertaufnehmer an zumindest einem der Rohrsegmente erfasst wird und,
- dass abhängig von dem erfassten mechanischen Parameter zeitlich nach einer Erstinstallation und Inbetriebnahme des Bauwerks der Ringspalt mit Vergussmasse verfüllt wird.

2. Verfahren nach Anspruch 1,
**dadurch gekennzeichnet, dass**
- die Rohrsegmente durch die Fügeelemente in der Art eines Double-Slip Joint mechanisch miteinander gekoppelt werden und/oder
- die an den Rohrsegmenten zueinander korrespondierende Fügeelemente angeordnet werden, so dass die zueinander korrespondierende Fügeelemente im gekoppelten Zustand aneinander anliegen und/oder
- sich zumindest eines der Fügeelemente in Richtung einer Stirnseite des Rohrsegments verjüngt.

3. Verfahren nach einem der vorangehenden Ansprüche,
**dadurch gekennzeichnet, dass**
- als mechanischer Parameter zumindest einer aus
- Dehnung des Rohrsegments,
- Stauchung des Rohrsegments,
- Schwingung des Rohrsegments,
- Beschleunigung des Rohrsegments,
- relative Bewegung der Rohrsegmente zueinander,
- eine Eigenfrequenz des Bauwerks,
- eine Veränderung der Eigenfrequenz des Bauwerks,
- ein Antwortverhalten, insbesondere im Frequenzbereich des Bauwerks,
- ein Spannungs-/Dehnungswert des Rohrsegments.

4. Verfahren nach einem der vorangehenden Ansprüche,
**dadurch gekennzeichnet, dass**
- der erfasste mechanische Parameter mit einem Sollwert verglichen wird und bei einer Abweichung über einem Grenzwert der Ringspalt mit Vergussmasse verfüllt wird.

5. Verfahren nach einem der vorangehenden Ansprüche,
**dadurch gekennzeichnet, dass**
- ein zeitlicher Gradient des erfasste mechanische Parameter mit einem Sollwert verglichen wird und bei einer Abweichung über einem Grenzwert der Ringspalt mit Vergussmasse verfüllt wird.

6. Verfahren nach einem der vorangehenden Ansprüche,
**dadurch gekennzeichnet, dass**
- die Festigkeit der Vergussmasse abhängig von einer vorgegebenen Restbetriebsdauer des Bauwerks bestimmt wird und mit abnehmender Restbetriebsdauer geringer wird.

7. Verfahren nach einem der vorangehenden Ansprüche,
**dadurch gekennzeichnet, dass**
- als Rohrsegmente Stahlrohrsegmente oder Stahlbeton verwendet werden und/oder
- als Rohrsegmente wenigstens im Bereich des Ringspalts zylindrische oder konische Rohrsegmente verwendet werden und/oder
- als Rohrsegmente solche Rohrsegmente eines Offshore-Bauwerks verwendet werden und/oder
- als Rohrsegmente Turmsegmente einer Windkraftanlage (2), insbesondere einer Offshore-Windkraftanlage (2), verwendet werden.

8. Verfahren nach einem der vorangehenden Ansprüche,
**dadurch gekennzeichnet, dass**
- die Rohrsegmente unter Ausbildung des Ringspalts zwischen den Rohrsegmenten konzentrisch zueinander positioniert werden.

9. Verfahren nach einem der vorangehenden Ansprüche,
**dadurch gekennzeichnet, dass**
- das äußere Rohrsegment und/oder innere Rohrsegment im Bereich des Ringspalts wenigstens eine Schubrippe aufweist, wobei insbesondere die wenigstens eine Schubrippe wenigstens im Wesentlichen umlaufend an dem Rohrsegmente angeordnet ist, insbesondere dass die wenigstens eine Schubrippe wenigstens im Wesentlichen ringförmig an dem Rohrsegmente angeordnet ist.

10. Verfahren nach einem der vorangehenden Ansprüche,
**dadurch gekennzeichnet, dass**
- als Vergussmasse ein Vergussmörtel und/oder ein Grout verwendet wird, insbesondere dass ein während des Aushärtens expandierendes Grout, ein sogenanntes expansives Grout, verwendet wird, und/oder dass ein Grout mit Alkali-Silica reaktiven Zuschlägen, Beimengungen von Bentonit, Calcium Sulfo Aluminat Zementen und/oder Aluminat verwendet wird.

11. Verfahren nach einem der vorangehenden Ansprüche,
**dadurch gekennzeichnet, dass**
- als Vergussmasse ein Vergussmörtel und/oder ein Grout mit einer Würfeldruckfestigkeit von mehr als 60MPa, bevorzugt mehr als 90Mpa, insbesondere mehr als 90MPa verwendet.

12. Verfahren nach einem der vorangehenden Ansprüche,
**dadurch gekennzeichnet, dass**
- das Bauwerk ein Offshore Bauwerk ist und dass die mechanischen Kopplung zwischen den Rohrsegmenten unterhalb des Wasserspiegels angeordnet wird.

13. Verfahren nach einem der vorangehenden Ansprüche,
**dadurch gekennzeichnet, dass**
- das der Abstand der beiden Fügeflächen in Längsrichtung (18) zueinander im Ringspalt derart ausgeführt wird, dass er zumindest das 0,5fache des Durchmessers des inneren Rohrsegments, bevorzugt zumindest das 1fache des Durchmessers des inneren Rohrsegments, insbesondere zumindest das 1,5fache des Durchmessers des inneren Rohrsegments beträgt, bevorzugt nicht mehr als das 3fache des Durchmessers des inneren Rohrsegments beträgt.

14. Verfahren nach einem der vorangehenden Ansprüche,
**dadurch gekennzeichnet, dass**
- das Verhältnis zwischen einem äußeren Durchmesser des Ringspalts zu seiner radialen Ausbreitung derart ausgeführt wird, dass dieses zumindest 20 beträgt.

15. Verfahren nach einem der vorangehenden Ansprüche,
**dadurch gekennzeichnet, dass**
- das die Vergussmasse über eine Öffnung (22) in dem inneren Rohrsegment in den Ringspalt eingebracht wird oder dass die Vergussmasse über eine Öffnung in zumindest einem der Fügeelemente in den Ringspalt eingebracht wird.

## Claims

1. Method for establishing a connection between two pipe segments of a tower-like structure, in particular a wind turbine (2), in which a first pipe segment is pushed into a second pipe segment at an end face or a first pipe segment is placed over a second pipe segment at an end face and an annular space (20) is formed between the first and the second pipe segment, two at least partially circumferential joining elements, spaced apart from one another in the longitudinal direction (18) of the pipe segments are arranged in the annular space (20), wherein the joining elements are arranged on an outer wall of one of the pipe segments and/or on an inner wall of one of the pipe segments, and the pipe segments are mechanically coupled to one another via the joining elements in the annular space (20), **characterized in that**
a mechanical parameter of the mechanical coupling between the pipe segments is detected by means of at least one measuring device on at least one of the pipe segments, and
- that, depending on the detected mechanical parameter, the annular gap is filled with grouting compound after an initial installation and commissioning of the structure.

2. Method according to claim 1,
**characterized in that**
- the pipe segments are coupled mechanically to one another by the joining elements in the manner of a double-slip joint and/or
- joining elements corresponding to one another on the pipe segments are arranged so that the joining elements corresponding to one another are in contact to one another in the coupled state and/or
- at least one of the joining elements tapers towards an end face of the pipe segment.

3. Method according to one of the preceding claims,
**characterized in that**
- at least one of the following is used as a mechanical parameter:
- expansion of the pipe segment,
- compression of the pipe segment,
- vibration of the pipe segment,
- acceleration of the pipe segment,
- relative movement of the pipe segments with respect to one another,
- a natural frequency of the structure,
- a change in the natural frequency of the structure,
- a response behaviour, in particular in the frequency range of the structure,
- a stress/strain value of the pipe segment.

4. Method according to one of the preceding claims,
**characterized in that**
- the detected mechanical parameter is compared with a nominal value and, in case of a deviation above a limit value, the annular gap is filled with grouting compound.

5. Method according to one of the preceding claims,
**characterized in that**
- a time gradient of the detected mechanical parameter is compared with a nominal value and, in case of a deviation above a limit value, the annular gap is filled with casting compound.

6. Method according to one of the preceding claims,
**characterized in that**
- the strength of the grouting compound is determined as a function of a predetermined remaining period of operation of the structure and is reduced as the remaining period of operation decreases.

7. Method according to one of the preceding claims,
**characterized in that**
- steel pipe segments or reinforced concrete are used as pipe segments and/or
- cylindrical or conical pipe segments, at least in the region of the annular gap, are used as pipe segments and/or
- pipe segments of an offshore structure are used as pipe segments and/or
- tower segments of a wind power installation (2), in particular of an offshore wind power installation (2), are used as pipe segments.

8. Method according to one of the preceding claims,
**characterized in that**
- the pipe segments are positioned concentrically to one another, forming the annular gap between the pipe segments.

9. Method according to one of the preceding claims,
**characterized in that**
the outer pipe segment and/or the inner pipe segment has at least one thrust rib in the region of the annular gap, wherein in particular the at least one thrust rib is arranged at least substantially circumferentially on the pipe segment, in particular that the at least one thrust rib is arranged at least substantially annularly on the pipe segment.

10. Method according to one of the preceding claims,
**characterized in that**
- a grout and/or a grouting mortar is used as the grouting compound, in particular that a grout which expands during hardening, a so-called expansive grout, is used, and/or that a grout is used which has alkali-silica reactive aggregates, admixtures of bentonite, calcium sulfo aluminate cements and/or aluminate.

11. Method according to one of the preceding claims,
**characterized in that**
- a grouting mortar and/or a grout with a cube compressive strength of more than 60 MPa, preferably more than 90 MPa, in particular more than 90 MPa, is used as the grouting compound.

12. Method according to one of the preceding claims,
**characterized in that**
the structure is an offshore structure and **in that** the mechanical coupling between the pipe segments is arranged below the water level.

13. Method according to one of the preceding claims,
**characterized in that**
- the distance between the two joining surfaces in the longitudinal direction (18) to one another in the annular gap is configured such that it is at least 0.5 times the diameter of the inner pipe segment, preferably at least 1 times the diameter of the inner pipe segment, in particular at least 1.5 times the diameter of the inner pipe segment, preferably not more than 3 times the diameter of the inner pipe segment.

14. Method according to any preceding claim,
**characterized in that**
- the ratio between an external diameter of the annular gap and its radial extent is designed such that it is at least 20.

15. Method according to one of the preceding claims,
**characterized in that**
the grouting compound is introduced into the annular gap via an opening (22) in the inner pipe segment or that the grouting compound is introduced into the annular gap via an opening in at least one of the joining elements.

## Revendications

1. Procédé de fabrication d'une liaison entre deux segments de tube d'une construction en forme de tour, en particulier d'une éolienne (2), où un premier segment de tube est glissé frontalement dans un deuxième segment de tube ou un premier segment de tube est enfilé frontalement sur un deuxième segment de tube et un espace annulaire (20) est formé entre le premier et le deuxième segment tubulaire, dans l'espace annulaire (20) sont disposés deux éléments d'assemblage au moins partiellement périphériques, où lest éléments d'assemblage sont espacés l'un de l'autre dans la direction longitudinale (18) des segments de tube, où les éléments d'assemblage sont disposés sur une paroi extérieure de l'un des segments de tube et/ou sur une paroi intérieure de l'un des segments de tube et les segments de tube sont couplés mécaniquement entre eux par intermédiaire des éléments d'assemblage dans l'espace annulaire (20),
**caractérisé en ce que**
un paramètre mécanique du couplage mécanique entre les segments de tube est détecté par au moins un dispositif de mesure sur au moins un des segments de tube et,
- qu'en fonction du paramètre mécanique détecté, l'espace annulaire est rempli de masse de scellement temporellement après une installation initiale et une mise en service de la construction.

2. Procédé selon la revendication 1,
**caractérisé en ce que**
- les segments de tube sont couplés mécaniquement entre eux par les éléments d'assemblage à la manière d'un joint double-slip et/ou
- les éléments d'assemblage correspondant les uns aux autres sont disposés sur les segments de tube, de sorte que les éléments d'assemblage correspondant les uns aux autres se contactent les uns avec les autres à l'état couplé et/ou
- au moins un des éléments d'assemblage se rétrécit vers une face frontale du segment de tube.

3. Procédé selon l'une des revendications précédentes,
**caractérisé en ce que**
- comme paramètre mécanique, au moins un des suivants
- allongement du segment tubulaire,
- compression du segment tubulaire,
- vibration du segment tubulaire,
- accélération du segment de tube,
- mouvement relatif des segments de tube les uns par rapport aux autres,
- une fréquence propre de la structure,
- une variation de la fréquence propre de la construction,
- un comportement de réponse, en particulier dans la plage de fréquences de la construction,
- une valeur de tension/allongement du segment de tube.

4. Procédé selon l'une des revendications précédentes,
**caractérisé en ce que**
- le paramètre mécanique détecté est comparé à une valeur de consigne et, en cas d'une écart supérieur à une valeur limite, l'espace annulaire est rempli avec un matériau de scellement.

5. Procédé selon l'une des revendications précédentes,
**caractérisé en ce que**
- un gradient temporel du paramètre mécanique détecté est comparé à une valeur de consigne et, en cas d'un écart supérieur à une valeur limite, l'espace annulaire est rempli de masse de scellement.

6. Procédé selon l'une des revendications précédentes,
**caractérisé en ce que**
- la solidité de la masse de scellement est déterminée en fonction d'une durée de fonctionnement résiduelle prédéfinie de la construction et diminue lorsque la durée de fonctionnement résiduelle diminue.

7. Procédé selon l'une des revendications précédentes,
**caractérisé en ce que**
- on utilise comme segments de tube des segments de tube en acier ou du béton armé et/ou
- des segments de tube cylindriques ou coniques au moins dans la zone de l'espace annulaire sont utilisés comme segments de tube et/ou
- des segments de tube d'un ouvrage offshore sont utilisés comme segments de tube et/ou
- des segments de tour d'une éolienne (2), notamment d'une éolienne offshore (2), sont utilisés comme segments de tube.

8. Procédé selon l'une des revendications précédentes,
**caractérisé en ce que**
- les segments de tube sont positionnés de manière concentrique les uns par rapport aux autres en formant l'espace annulaire entre les segments de tube.

9. Procédé selon l'une des revendications précédentes,
**caractérisé en ce que**
- le segment de tube extérieur et/ou le segment de tube intérieur a au moins une nervure de cisaillement dans la zone de l'espace annulaire, où en particulier la au moins une nervure de cisaillement est disposée au moins essentiellement sur le pourtour du segment tubulaire, en particulier **en ce que** la au moins une nervure de cisaillement est disposée au moins essentiellement en forme d'anneau sur le segment de tube.

10. Procédé selon l'une des revendications précédentes,
**caractérisé en ce que**
- comme masse de scellement un mortier de scellement et/ou un coulis est utilisé, en particulier un coulis qui s'expanse pendant le durcissement, un coulis dit expansif, est utilisé et/ou un coulis avec des agrégats réactifs à la silice alcaline, des additions de bentonite, des ciments sulfoaluminate de calcium et/ou de l'aluminate est utilisé.

11. Procédé selon l'une des revendications précédentes,
**caractérisé en ce que**
- comme masse de scellement un mortier de scellement et/ou un coulis est utilisé ayant une résistance à la compression au cube supérieure à 60 MPa, de préférence supérieure à 90 MPa, en particulier supérieure à 90 MPa.

12. Procédé selon l'une des revendications précédentes,
**caractérisé en ce que**
- la construction est une construction offshore et que le couplage mécanique entre les segments de tube est placé sous le niveau de l'eau.

13. Procédé selon l'une des revendications précédentes,
**caractérisé en ce que**
- la distance entre les deux surfaces d'assemblage dans la direction longitudinale (18) dans l'espace annulaire est telle qu'elle vaut au moins 0,5 fois le diamètre du segment de tube intérieur, de préférence au moins 1 fois le diamètre du segment de tube intérieur, en particulier au moins 1,5 fois le diamètre du segment de tube intérieur, de préférence non supérieure à 3 fois le diamètre du segment de tube intérieur.

14. Procédé selon l'une des revendications précédentes,
**caractérisé en ce que**
- le rapport entre le diamètre extérieur de l'espace annulaire et son extension radiale est tel qu'il vaut au moins 20.

15. Procédé selon l'une des revendications précédentes,
**caractérisé en ce que**
- la masse de scellement est introduite dans l'espace annulaire par une ouverture (22) dans le segment de tube intérieur ou que la masse de scellement est introduite dans l'espace annulaire par une ouverture dans au moins un des éléments d'assemblage.
